# EUROPÄISCHE PATENTSCHRIFT

(11) **EP 1 519 081 B1**
(45) Veröffentlichungstag und Bekanntmachung des Hinweises auf die Patenterteilung: **06.12.2006**
(21) Anmeldenummer: 03021910.9
(22) Anmeldetag: 29.09.2003
(51) Int. Cl.: F16H 61/12

(54) **Ansteuereinrichtung für Kupplungen und/oder Gangaktuatoren eines Automatikgetriebes oder automatischen Schaltgetriebes**
Control device for clutches and/or gear actuators of an automatic gearbox or an automatic transmission
Dispositif de commande pour embrayages et/ou actuateurs d'engrenages, d'une boîte de vitesses ou d'une transmission automatique

(43) Veröffentlichungstag der Anmeldung: 30.03.2005
(73) Patentinhaber: BorgWarner Inc., Auburn Hills MI 48326 (US)
(72) Erfinder: Ebinger, Günter, Dr., 76684 Östringen (DE); Burmeister, Matthias, 69121 Heidelberg (DE); Sandstrom, Eric, Oxford Michigan 48371 (US)
(74) Vertreter: Neunert, Peter Andreas

(56) Entgegenhaltungen:
- EP-A- 0 627 579
- US-A- 4 841 816
- US-A- 5 249 476

## Beschreibung

Die Erfindung betrifft eine Ansteuereinrichtung für Kupplungen und/oder Gangaktuatoren eines Automatikgetriebes oder automatischen Schaltgetriebes beispielsweise eines Kraftfahrzeugs, gemäss dem Oberbegriff des Anspruchs 1 sowie ein Verfahren zum Betreiben der Ansteuereinrichtung.

Die überwiegende Anzahl von Automatikgetrieben herkömmlicher Bauart weist einen sogenannten hydrodynamischen Wandler auf, um ein Kraftfahrzeug aus dem Stand in die Bewegung setzen zu können. Da mittlerweile die Ansprüche der Fahrzeugführer an den Kraftstoffverbrauch und an den Fahrkomfort erheblich gestiegen sind, wurde es erforderlich, in jedem Betriebszustand des Kraftfahrzeugs Steuer- und/oder Regeleingriffe zuzulassen.

Bei einigen Automatikgetrieben neuerer Bauart ist daher der hydrodynamische Drehmomentwandler durch eine Kupplung ersetzt worden. Diese Kupplung wird hydraulisch angesteuert bzw. geregelt und gleichzeitig hydraulisch gekühlt.

Fernerhin weisen gestufte Automatikgetriebe mehrere hydraulisch schaltbare Kupplungen, Bremsen und/oder sonstige Gangaktuatoren auf. Beispielhaft sei auf ein Doppelkupplungsgetriebe neuerer Bauart, wie es der DE 198 21 16 A1 zu entnehmen ist, hingewiesen, bei der die Funktionen Anfahren und Schalten mit Hilfe zweier Kupplungen realisiert werden.

Eine Ansteuereinrichtung für Kupplungen und/oder Gangaktuatoren eines vorstehend beschriebenen (Stufen-) Automatikgetriebes, von der die Erfindung ausgeht, umfasst ein Ventil, welches in Abhängigkeit von der jeweiligen Position des Fahrbereichswählhebels (z. B. Drive "D", Neutral "N", Reverse "R" bzw. Park "P") Hydraulikflüssigkeit führende Kanäle zu den vorhandenen Kupplungen und/oder Gangaktuatoren öffnet oder schließt. Ein Fehler in der Ansteuereinrichtung, beispielsweise weil ein sonstiges Steuerventil ausgefallen ist oder weil ein plötzlicher Druckabfall in einem Hydraulikflüssigkeit führenden Kanal auf Grund einer Leckage aufgetreten ist, kann zu einem sicherheitskritischen Fahrzustand des Kraftfahrzeugs führen.

Die EP 0 627 579 A1, die als nächstliegender Stand der Technik angesehen wird, offenbart zur Vermeidung eines derartigen sicherheitskritischen Fahrzustands, dass das Ventil mittels eines Schrittmotors in eine ausfallsichere Position verbracht wird. Eine ähnliche Ausführungsvariante ist auch der US 5,249,476 zu entnehmen.

In beiden Fällen ist ein Schrittmotor und die zugehörige Ansteuerung erforderlich, um das Ventil in eine Stellung zu verbringen, in dem ein sicherheitskritischer Zustand ausgeschlossen ist.

Die Aufgabe der Erfindung liegt nunmehr darin, ein hydraulisches Konzept zur Vermeidung eines sicherheitskritischen Fahrzustandes vorzustellen, welches ohne einen Schrittmotor auskommt.

Diese Aufgabe wird durch eine Ansteuereinrichtung mit den Merkmalen des Patentanspruchs 1 sowie durch ein Verfahren mit den Merkmalen des Patentanspruchs 9 erfindungsgemäß gelöst.

Vorteilhafte Ausführungen und Weiterbildungen der Erfindung sind in den Unteransprüchen angegeben.

Bei einer Ansteuereinrichtung der gattungsgemäßen Art ist eine Stelleinrichtung vorgesehen, mit Hilfe der das vorstehend beschriebene, in Abhängigkeit von der Position des Fahrbereichswählhebels Hydraulikflüssigkeit führende Kanäle zu den Kupplungen und/oder Gangaktuatoren öffnende oder schließende Ventil in eine von der Fahrbereichswählhebelposition unabhängige Stellung verbringbar ist. Wenn also im Normalbetrieb mit dem in Rede stehenden Ventil die Fahrbereiswahl durchgeführt wird, kann im Fehlerfall die Ventilstellung mit Hilfe der Stelleinrichtung unabhängig von der Fahrbereichswählhebelposition festgelegt werden. In dieser von der Fahrbereichswählhebelposition unabhängigen Stellung werden die Kupplungen und Gangaktuatoren derart angesteuert, dass ein sicherheitskritischer Fahrzustand des Kraftfahrzeuges ausgeschlossen ist.

In einer bevorzugten Ausführungsvariante ist vorgesehen, dass wenigstens einer der Hydraulikflüssigkeit führenden Kanäle, vorzugsweise jedoch alle Hydraulikflüssigkeit führenden Kanäle, zu den Kupplungen und/oder Gangaktuatoren belüftet sind, wenn sich das im Normalbetrieb für die Fahrbereichswahl zuständige Ventil in der von der Fahrbereichswählhebelposition unabhängigen Stellung befindet. Dieser Betriebszustand lässt sich stets herstellen, unabhängig davon, welches Element der Ansteuereinrichtung im Einzelfall fehlerhaft arbeitet bzw. ausgefallen ist.

Verwendet man zur Fahrbereichswahl einen bei Stufenautomatikgetrieben häufig eingesetzten Handschieber, dessen linear verschieblich in einem in der Fachsprache als Steuergehäuse bezeichneten Zylinder geführter Kolben in Abhängigkeit von der Fahrbereichswählhebelposition in eine Richtung verschiebbar ist, so lässt sich dieser Kolben erfindungsgemäß mit Hilfe einer auf den Kolben in die gleiche Richtung einwirkende Kolbenbetätigungsfeder in die von der Fahrbereichswählhebelposition unabhängige Stellung verbringen.

Vorteilhaferweise weist die Stelleinrichtung ferner eine auf den Kolben in die andere Richtung einwirkende hydraulische Betätigungseinrichtung auf, um den Kolben entgegen der Federkraft der Kolbenbetätigungsfeder aus der von der Fahrbereichswählhebelposition unabhängigen Stellung in die Stellung zu verbringen, welche durch die Fahrbereichswählhebelposition festgelegt ist. Bei fehlender hydraulischer Betätigung befindet sich somit der Kolben stets in der von der Fahrbereichswählhebelposition unabhängigen Stellung auf Grund der auf den Kolben in die eine Richtung einwirkenden Federkraft der Kolbenbetätigungsfeder.

In besonders vorteilhafter Ausgestaltung dieser Variante ist erfindungsgemäß vorgesehen, dass die Betätigungseinrichtung eine über einen Hydraulikflüssigkeit führenden Kanal mit Hydraulikflüssigkeit beaufschlagbare Stirnfläche des Kolbens sowie ein diesen Hydraulikflüssigkeit führenden Kanal öffnendes oder schließendes zweites Ventil umfasst. Ist das Ventil geöffnet, so wird die Stirnfläche des Kolbens über den Hydraulikflüssigkeit führenden Kanal mit dem Hydraulikflüssigkeitsdruck beaufschlagt und der Kolben entgegen der Federkraft der Kolbenbetätigungsfeder in die andere Richtung verschoben, soweit der Fahrbereichswählhebel eine derartige Verschiebung zulässt. Ist das Ventil geschlossen, so ist die Hydraulikflüssigkeitsversorgung unterbrochen und die Stirnfläche des Kolbens wird nicht mehr mit dem Hydraulikflüssigkeitsdruck beaufschlagt. Die'Kolbenbetätigungsfeder verbringt nunmehr den Kolben in die von der Fahrbereichswählhebelposition unabhängige Stellung.

Um in diesem Fall den hydraulischen Druck schnell von der Stirnfläche des Kolbens abzuführen, ist erfindungsgemäß vorgesehen, dass es sich bei dem Ventil um ein elektromagnetisch betätigbares (3/2-Wege) Ein-Aus-Ventil handelt, welches im geschlossenen, die Druckversorgung unterbrechenden Zustand den Kanal zwischen Ventil und der Stirnfläche des Kolbens belüftet.

In einer besonders einfachen Ausführungsvariante ist vorgesehen, dass der Fahrbereichswählhebel über einen Bowdenzug mit einer Kurvenscheibe verbunden ist, die über eine Rolle auf eine den Kolben verschiebende Betätigungsstange einwirkt.

Vorzugsweise weist der Zylinder zu jeder Kupplung und/oder zu jedem Gangaktuator jeweils drei in axialer Richtung in gleichem Abstand benachbart zueinander angeordnete Schlitze auf, wobei jeweils der mittlere Schlitz über jeweils einen der Hydraulikflüssigkeit führenden Kanäle mit der jeweiligen Kupplung und/oder dem jeweiligen Gangaktuator verbunden ist. Fernerhin ist jeweils der der einen Richtung zugewandte Schlitz über jeweils einen Kanal mit einem offenen Behälter und jeweils der der anderen Richtung zugewandte Schlitz jeweils einem der Hydraulikflüssigkeit führenden Kanäle verbunden. Schließlich ist den jeweils drei in axialer Richtung (vorzugsweise in gleichem Abstand) benachbart zueinander angeordneten Schlitzen jeweils ein zwei benachbarte Schlitze übergreifender öffnender Kolbenabschnitt zugeordnet, so dass entweder eine Verbindung zwischen dem jeweiligen mittleren Schlitz und dem der einen Richtung zugewandten Schlitz oder zwischen dem mittleren Schlitz und der der anderen Richtung zugewandten Schlitz herstellbar ist.

Weiterhin umfasst die Ansteuereinrichtung erfindungsgemäß in den Hydraulikflüssigkeit führenden Kanälen zu den Kupplungen und/oder Gangaktuatoren angeordnete elektromagnetisch betätigbare (3/2-Wege) Steuerventile.

Die Erfindung wird nunmehr mit Hilfe der Zeichnungen näher beschrieben. Es zeigen:
- Fig. 1: Ein Ausführungsbeispiel einer Ansteuereinrichtung für zwei Kupplungen eines Doppelkupplungsgetriebes.. Die Ansteuereinrichtung befindet sich im Normalbetriebszustand. Der Fahrbereichswählhebel befindet sich in der Position "D" (Drive).
- Fig. 2: Die Ansteuereinrichtung gemäß der Figur 1. Die Ansteuereinrichtung befindet sich im Fehlerbetriebszustand. Der Fahrbereichswählhebel befindet sich in der Position "D" (Drive).
- Fig. 3: Die Ansteuereinrichtung gemäß den Figuren 1 und 2. Die Ansteuereinrichtung befindet sich im Normalbetriebszustand. Der Fahrbereichswählhebel befindet sich in der Position "N" (Neutral).

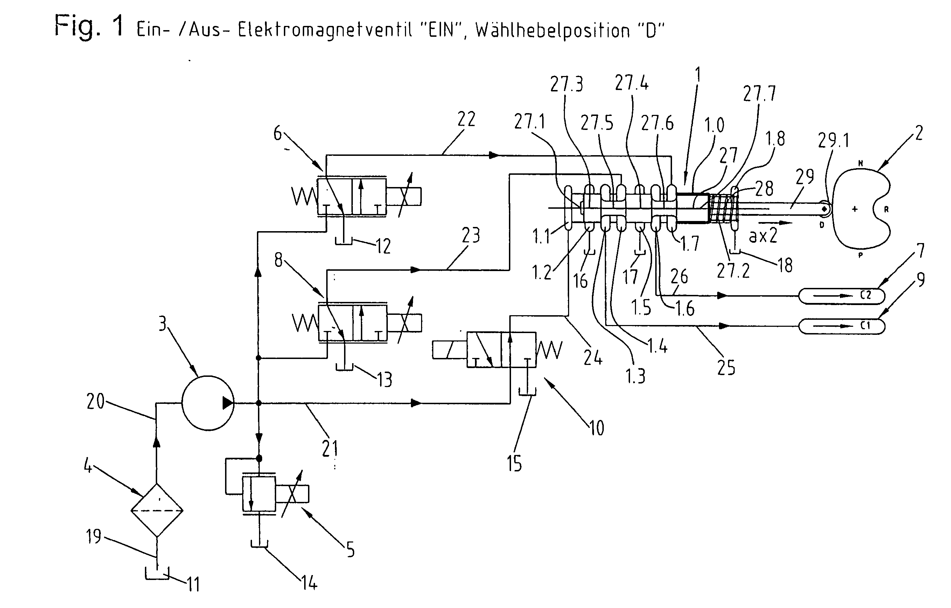

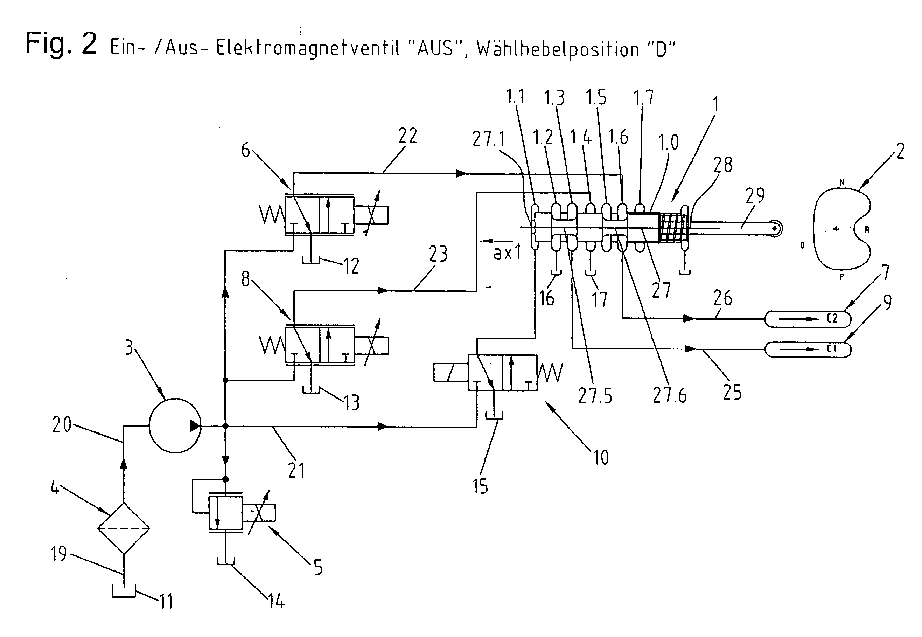

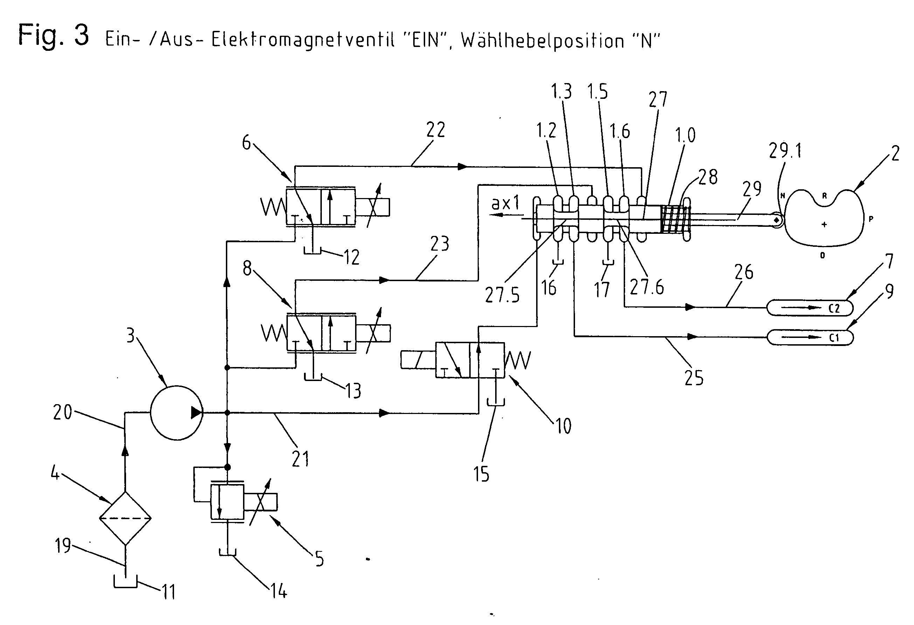

Die Figuren 1 bis 3 zeigen in Form von Prinzipschaltbildern ein Ausführungsbeispiel einer erfindungsgemäßen Ansteuereinrichtung für zwei Kupplungen 7 und 9 eines an sich bekannten Doppelkupplungsgetriebes eines Kraftfahrzeugs in unterschiedlichen Betriebszuständen. Insbesondere zeigen die Figuren 1 und 3 die Ansteuereinrichtung bei Normalbetrieb, die Figur 2 zeigt die Ansteuereinrichtung im Fehlerfall.

Um in der nachfolgenden Beschreibung eine einheitliche und einfache Bezugnahme zu gewährleisten, sind die in allen Figuren 1 bis 3 identisch vorliegenden Komponenten der beispielhaft skizzierten Ansteuereinrichtung mit einheitlichen Bezugszeichen versehen.

Die Zeichnungsfiguren zeigen als wesentliche Komponenten der erfindungsgemäßen Ansteuereinrichtung ein von einem Hydraulikflüssigkeitsbehälter 11 über eine Hydropumpe 3 gespeistes Hydraulikflüssigkeitskanalsystem, deren einzelne Kanäle mit den Bezugszeichen 19 bis 26 gekennzeichnet sind, ein elektromagnetisch betätigbares Hauptdruckregelventil 5 zum Regeln des Drucks der von der Hydropumpe 3 bereitgestellten Hydraulikflüssigkeit, einen Handschieber 1 zum Freigeben oder Unterbrechen des Hydraulikflüssigkeitsflusses zu den beiden Kupplungen 7 und 9 in Abhängigkeit von der gewählten Position des Fahrbereichswählhebels für das Automatikgetriebe des Kraftfahrzeugs, zwei elektromagnetisch betätigbare 3/2-Wege Steuerventile 6 und 8 zum Ansteuern der beiden Kupplungen 7 und 9 sowie ein elektromagnetisch betätigbares 3/2-Wege Ein-/Aus-Ventil 10, dessen Funktion nachfolgend im Detail beschrieben wird.

Der Handschieber 1 ist in an sich bekannter Art ausgebildet. Er umfasst ein im wesentlichen zylinderförmiges Steuergehäuse 1.0, welches über dessen axialer Erstreckung ax1, ax2 acht Schlitze 1.1, 1.2, 1.3, 1.4, 1.5, 1.6, 1.7 und 1.8 aufweist.

In diesem Steuergehäuse 1.0 ist in axialer Richtung ax1, ax2 ein Kolben 27 begrenzt verschieblich geführt. Die erste Stirnseite 27.1 des Kolbens 27 bildet einen einendseitigen Anschlag an einer Endseite des Steuergehäuses 1.0. Zwischen der zweiten Stirnseite 27.2 des Kolbens 27 und der anderen Endseite des Steuergehäuses 1.0 ist eine Kolbenbetätigungsfeder 28 angeordnet, welche bei fehlender sonstiger Krafteinwirkung auf den Kolben 27 die erste Stirnseite 27.1 des Kolbens 27 gegen die eine Endseite des Steuergehäuses 1.0 gedrückt hält.

Der Kolben 27 weist längs seiner axialen Erstreckung ax1, ax2 unterschiedliche Durchmesser auf. Es gibt drei Kolbenabschnitte 27.3, 27.4 und 27.7, welche im wesentlichen formschlüssig in der Innenwandung des Steuergehäuses 1.0 geführt sind. Fernerhin gibt es zwei Kolbenabschnitte 27.5, 27.6, welche einen kleineren Außendurchmesser aufweisen. Ein Kolbenabschnitt 27.5, 27.6 der letztgenannten Art ist dabei jeweils in axialer Richtung ax1, ax2 zwischen zwei Kolbenabschnitten 27.3, 27.4, 27.7 der erstgenannten Art angeordnet.

Erstreckt sich ein Kolbenabschnitt 27.5, 27.6 der letztgenannten Art in einer bestimmten Stellung des Kolbens 27 in dem Steuergehäuse 1.0 von einem Schlitz 1.1, 1.2, 1.3, 1.4, 1.5, 1.6, 1.7, 1.8 zu einem benachbarten Schlitz 1.1, 1.2, 1.3, 1.4, 1.5, 1.6, 1.7, 1.8, so ist ein Durchfluss von Hydraulikflüssigkeit zwischen diesen beiden benachbarten Schlitzen 1.1, 1.2, 1.3, 1.4, 1.5, 1.6, 1.7, 1.8 möglich. Kolbenabschnitte 27.5, 27.6 der letztgenannten Art werden daher im Folgenden als öffnende Kolbenabschnitte 2.5, 27.6 bezeichnet, die anderen formschlüssig an der Innenwandung des Steuergehäuses 1.0 geführten Kolbenabschnitte 27.3, 27.4, 27.7 werden nachfolgend als schließende Kolbenabschnitte 27.3, 27.4, 27.7 bezeichnet, da hier kein Durchfluss von Hydraulikflüssigkeit zwischen benachbarten Schlitzen 1.1, 1.2, 1.3, 1.4, 1.5, 1.6, 1.7, 1.8 möglich ist.

Auf der zweiten Stirnseite 27.2 des Kolbens 27 ist eine die Kolbenbetätigungsfeder 28 zentral durchsetzende Betätigungsstange 29 aufgesetzt. Mit dieser Betätigungsstange 29 lässt sich der Kolben 27 in dem zylinderförmigen Steuergehäuse 1.0 in einer Richtung ax1 verschieben.

Die Betätigungsstange 29 trägt auf deren anderen Stirnseite eine Rolle 29.1. Diese Rolle 29.1 ist auf dem Aussenumfang einer um eine Drehachse drehbar gelagerten nierenförmigen Kurvenscheibe 2 aufgesetzt.

Durch Abrollen der Rolle 29.1 auf dem Aussenumfang der Kurvenscheibe 2 kann die Betätigungsstange in der vorstehend angegebenen einen axialen Richtung ax1 den Kolben 27 bewegend verschoben werden.

Die Kurvenscheibe 2 steht über einen nicht dargestellten Bowdenzug mit einem hier ebenfalls nicht dargestellten Fahrbereichswählhebel für das Automatikgetriebe des Kraftfahrzeugs in Verbindung. Entsprechend der Position "D" ("Drive"), "N" ("Neutral") "R" ("Reverse") und "P" ("Park") des Wählhebels wird die Kurvenscheibe 2 in eine andere Stellung verbracht. Welche Stellung der Kurvenscheibe 2 welcher Position des hier nicht dargestellten Fahrbereichswählhebels entspricht, ist in den Zeichnungsfiguren durch die korrespondierenden Bezugszeichen "D", "N", "R" und "P" gekennzeichnet.

Die einzelnen vorstehend genannten bzw. beschriebenen Einzelbauteile der Ansteuereinrichtung sind wie folgt über ein Hydraulikflüssigkeitskanalsystem in nachfolgend beschriebener Weise verbunden:
Im Hydraulikflüssigkeitsbehälter 11 wird Hydraulikflüssigkeit bereit gestellt. Von diesem Hydraulikflüssigkeitsbehälter 11 führt ein Kanal 19 zu einem Filter 4 und von dort über einen Kanal 20 zur Hydropumpe 3, welche einen hydraulischen Druck im Leitungssystem erzeugt.

Der Ausgang der Hydropumpe 3 mündet in den Kanal 21. An diesen Kanal 21 ist das vorstehend genannte elektromagnetisch betätigbare Hauptdruckregelventil 5 angeschlossen, welches den Druck der Hydraulikflüssigkeit im Kanal 21 durch Abgabe überschüssiger Hydraulikflüssigkeit in einen offenen Behälter 14 regelt. Der Hydraulikflüssigkeit führende Kanal 21 ist nunmehr auf das elektromagnetisch betätigbare 3/2-Wege Steuerventil 8 geführt und von dort weiter über den Kanal 23 auf den Schlitz 1.4 des Handschiebers 1. Die beiden an diesen Schlitz 1.4 in der einen Richtung anschließenden Schlitze 1.3 und 1.2 sind über den Kanal 25 mit der ersten Kupplung 9 bzw. unmittelbar mit dem offenen Behälter 16 verbunden.

Der Kanal 21 ist weiterhin mit dem elektromagnetisch betätigbaren 3/2-Wege Steuerventil 6 für die zweite Kupplung 7 verbunden, welches weiter über den Kanal 22 auf den Schlitz 1.7 des Handschiebers 1 geführt ist. Der an diesen in der einen Richtung ax1 anschließende Schlitz 1.6 ist über den Kanal 26 mit der zweiten Kupplung 7 verbunden. Der an diesen Schlitz 1.6 anschließende Schlitz 1.5 ist ähnlich dem Schlitz 1.2 unmittelbar mit dem offenen Behälter 17 verbunden.

Schließlich existiert eine Verbindung des Kanals 21 mit dem elektromagnetisch betätigbaren 3/2-Wege Ein-/Aus-Ventil 10 und den Kanal 24 zum Schlitz 1.1 des Handschiebers 1.

Für die folgende Betrachtung wird nunmehr angenommen, dass ein Motor (auch Elektromotor möglich) die Hydropumpe 3 so antreibt, dass an deren Pumpenaustritt und damit im Kanal 21 ein von dem Hauptdruckregelventil 5 geregelter im wesentlichen konstanter Hydraulikflüssigkeitshauptdruck anliegt.

Die einzelnen Ventile 6, 8, 10 und 1 sollen sich zunächst in der in Figur 1 dargestellten Stellung befinden. Insbesondere sind die Steuerventile 6 und 8 geschlossen. Das Ein-/Aus-Ventil 10 ist geöffnet. Der Hydraulikflüssigkeitsdruck des Kanals 21 wird über den Kanal 24 zum Schlitz 1.1 geführt und wirkt entgegen der Kraft der Kolbenbetätigungsfeder 28 auf die erste Stirnseite 27.1 des Kolbens 27. Der Kolben 27 wird aufgrund des hydraulischen Drucks in einer Stellung gehalten, in der die Rolle 29.1 der Betätigungsstange 29 auf der Kurvenscheibe 2 aufsitzt. Der Kolben 27 befindet sich aufgrund dessen in einer Position in der die öffnenden Kolbenabschnitte 27.5 und 27.6 die jeweiligen benachbarten Schlitze 1.3 und 1.4 bzw. 1.6 und 1.7 übergreifen.

Beide Kupplungen 7 und 9 sind in der in Figur 1 dargestellten Ventilstellung jeweils über den Kanal 26, den Schlitz 1.6, den Schlitz 1.7, den Kanal 22, das Steuerventil 6 und dem mit dem offenen Behälter 12 verbundenen Anschluss des Ventils 6 bzw. über den Kanal 25, den Schlitz 1.3, den Schlitz 1.4, den Kanal 23, das Steuerventil 8 und dem mit dem offenen Behälter 13 verbundenen Anschluss des Steuerventils 8 belüftet.

Es versteht sich für den Fachmann von selbst, dass die beiden Kupplungen 7 und 9 durch entsprechendes Schalten der Steuerventile 6, 8 über die Kanäle 21, 22, die Schlitze 1.7, 1.6 und den Kanal 16 bzw. über die Kanäle 21 und 23, die Schlitze 1.4, 1.3 und den Kanal 25 mit Hydraulikflüssigkeitsdruck versorgt werden können.

Im folgenden wird nunmehr angenommen, dass das Steuerventil 6 ' ausgefallen ist und sich nicht mehr betätigen lässt. Um einen sicherheitskritischen Fahrzustand zu verhindern, ist entsprechend der Figur 2 die hydraulische Verbindung zwischen Kanal 21 und Kanal 24 durch Umschalten des Ein-/Aus-Ventils 10 unterbrochen worden.

Die Stirnseite 27.1 des Kolbens ist nunmehr nicht mehr druckbeaufschlagt, da die Hydraulikflüssigkeit über den Schlitz 24, das Ein-/Aus-Ventil 10 und den mit dem offenen Behälter 15 verbundenen Anschluss des Ventils 10 belüftet ist. Der Kolben 27 wird auf Grund der Federkraft der Kolbenbetätigungsfeder 28 in die eine Richtung ax1 anschlag begrenzt verschoben. Die öffnenden Kolbenabschnitte 27.5 bzw. 27.6 stellen nunmehr eine Verbindung zwischen dem Kanal 25, dem Schlitz 1.3, dem Schlitz 1.2 und dem offenen Behälter 16 bzw. dem Kanal 26, dem Schlitz 1.6, dem Schlitz 1.5 und dem offenen Behälter 17 her, über welche die die Kupplungen 7 und 9 mit Druck beaufschlagende Hydraulikflüssigkeit abfließen kann.

In dieser Kolbenposition, welche unabhängig von der Position "D", "N", "P", "R" des Fahrbereichswählhebels ist, sind alle Versorgungskanäle 25, 26 zu den Kupplungen 7,9 belüftet. Dadurch steht an den Kupplungen 7,9 kein unerwünschter Betätigungsdruck an, so dass ein sicherheitskritischer Fahrzustand des Kraftfahrzeugs wirkungsvoll verhindert wird.

Der Vollständigkeit halber zeigt die Figur 3 ein Prinzipschaltbild der erfindungsgemäßen Ansteuereinrichtung gemäß den Figuren 1 und 2, bei der der Kolben 27 des Handschiebers 1 nunmehr jedoch auf Grund der vom Fahrer gewählten Position "N" des Fahrbereichswählhebels in dieselbe Position verbracht ist, wie sie nach der Figur 2 aufgrund der Stellung des Ventils 10 und der Wirkung der Kraft der Kolbenbetätigungsfeder 28 hergestellt wurde.

### Bezugszeichenliste

- 1: Handschieber

- 1.0: Zylinder / Steuergehäuse
- 1.1: Schlitz
- 1.2: Schlitz
- 1.3: Schlitz
- 1.4: Schlitz
- 1.5: Schlitz
- 1.6: Schlitz
- 1.7: Schlitz
- 1.8: Schlitz

- 2: Kurvenscheibe
- 3: Hydropumpe
- 4: Filter
- 5: Hauptdruckregelventil
- 6: elektromagnetisch betätigbares 3/2-Wege Steuerventil für zweite Kupplung 7
- 7: zweite Kupplung
- 8: elektromagnetisch betätigbares 3/2-Wege Steuerventil für erste Kupplung 9 '
- 9: erste Kupplung
- 10: elektromagnetisch betätigbares 3/2-Wege Ein-/Aus-Ventil
- 11: Hydraulikflüssigkeitsbehälter
- 12: offener Behälter
- 13: offener Behälter
- 14: offener Behälter
- 15: offener Behälter
- 16: offener Behälter
- 17: offener Behälter
- 18: offener Behälter
- 19: Kanal
- 20: Kanal
- 21: Kanal
- 22: Kanal
- 23: Kanal
- 24: Kanal
- 25: Kanal
- 26: Kanal
- 27: Kolben

- 27.1: erste Stirnseite des Kolbens 27
- 27.2: zweite Stirnseite des Kolbens 27
- 27.3: schließender Kolbenabschnitt
- 27.4: schließender Kolbenabschnitt
- 27.5: öffnender Kolbenabschnitt
- 27.6: öffnender Kolbenabschnitt
- 27.7: schließender Kolbenabschnitt

- 28: Kolbenbetätigungsfeder
- 29: Betätigungsstange

- 29.1: Rolle

- D: Wahlhebelposition "Drive"
- N: Wahlhebelposition "Neutral"
- R: Wahlhebelposition "Reverse"
- P: Wahlhebelposition "Park"

- ax1: eine axiale Richtung
- ax2: andere axiale Richtung

## Patentansprüche

1. Ansteuereinrichtung für Kupplungen (7, 9) und / oder Gangaktuatoren eines Automatikgetriebes oder automatischen Schaltgetriebes mit einem ersten in Abhängigkeit von einer Position (D, N, R, P) eines Fahrbereichswählhebels Hydraulikflüssigkeit führende Kanäle (22, 23, 25, 26) zu den Kupplungen (7, 9) und / oder Gangaktuatoren öffnenden oder schließenden Ventil (1), wobei eine Stelleinrichtung (10, 28) vorgesehen ist, mit Hilfe der das erste Ventil (1) in eine von der Fahrbereichswählhebelposition (D, N, R, P) unabhängige Stellung verbringbar ist,
**dadurch gekennzeichnet, dass**
das erste Ventil (1) ein Handschieber ist, dessen linear verschieblich in einem Zylinder (1.0) geführter Kolben (27) in Abhängigkeit von der Fahrbereichswählhebelposition (D, N, R, P) in eine Richtung (ax1) verschiebbar ist und dass die Stelleinrichtung (10, 28) eine auf den Kolben (27) in die eine Richtung (ax1) einwirkende Kolbenbetätigungsfeder (28) aufweist, um den Kolben (27) in die von der Fahrbereichswählhebelposition (D, N, R, P) unabhängige Stellung zu verbringen.

2. Ansteuereinrichtung nach Anspruch 1,
**dadurch gekennzeichnet, dass**
wenigstens einer der Hydraulikflüssigkeit führenden Kanäle (25, 26), vorzugsweise alle Hydraulikflüssigkeit führenden Kanäle (25, 26), zu den Kupplungen (7, 9) und / oder Gangaktuatoren belüftet ist, wenn sich das erste Ventil (1) in der von der Fahrbereichswählhebelposition (D, N, R, P) unabhängigen Stellung befindet.

3. Ansteuereinrichtung nach Anspruch 1 oder 2,
**dadurch gekennzeichnet, dass**
die Stelleinrichtung (10, 28) eine auf den Kolben (27) in die andere Richtung (ax2) einwirkende hydraulische Betätigungseinrichtung (24, 10, 1.1, 27.1) aufweist, um den Kolben (27) aus der von der Fahrbereichswählhebelposition (D, N R, P) unabhängigen Stellung zu verbringen.

4. Ansteuereinrichtung nach Anspruch 3,
**dadurch gekennzeichnet, dass**
die Betätigungseinrichtung (10, 28) eine über einen Hydraulikflüssigkeit führenden Kanal (24) mit Hydraulikflüssigkeit beaufschlagbare Stirnfläche (2.1) des Kolbens (27) sowie ein diesen Hydraulikflüssigkeit führenden Kanal (24) öffnendes oder schließendes zweites Ventil (10) umfasst.

5. Ansteuereinrichtung nach einem der Ansprüche 1 bis 4,
**dadurch gekennzeichnet, dass**
der Fahrbereichswählhebel über einen Bowdenzug oder Gestänge mit einer Kurvenscheibe (2) verbunden ist, die über eine Rolle (29.1) auf eine den Kolben (27) verschiebenden Betätigungsstange (29) einwirkt.

6. Ansteuereinrichtung nach einem der Ansprüche 1 bis 5,
**dadurch gekennzeichnet, dass**
der Zylinder (1.0) zu jeder Kupplung (7, 9) und oder zu jedem Gangaktuator jeweils drei in axialer Richtung (ax1, ax2) benachbart zueinander angeordnete Schlitze (1.2, 1.3, 1.4; 1.5, 1.6, 1.7) aufweist, wobei jeweils der mittlere Schlitz (1.3; 1.6)über jeweils einen der Hydraulikflüssigkeit führenden Kanäle (25; 26) mit der jeweiligen Kupplung (7, 9) und / oder dem jeweiligen Gangaktuator verbunden ist, wobei jeweils der der einen Richtung (ax1) zugewandte Schlitz (1.4; 1.7) mit jeweils einem der Hydraulikflüssigkeit führenden Kanäle (22, 23) verbunden ist und dass den jeweils drei in axialer Richtung (ax1, ax2) in gleichem Abstand benachbart zueinander angeordneten Schlitzen (1.2, 1.3, 1.4; 1.5, 1.6, 1.7) jeweils ein zwei benachbarte Schlitze (1.2, 1.3, 1.4; 1.5, 1.6, 1.7) übergreifender öffnender Kolbenabschnitt (27.5, 27.6) zugeordnet ist.

7. Ansteuereinrichtung nach einem der Ansprüche 4 bis 6,
**dadurch gekennzeichnet, dass**
das zweite Ventil (10) ein elektromagnetisch betätigbares Ein-/Aus-Ventil (10) ist.

8. Ansteuereinrichtung nach einem der vorangegangenen Ansprüche,
**dadurch gekennzeichnet, dass**
in den Hydraulikflüssigkeit führenden Kanälen (22, 23) zu den Kupplungen (7, 9) und / oder Gangaktuatoren jeweils ein elektromagnetisch betätigbares Ventil (6, 8) angeordnet ist.

9. Verfahren zur Vermeidung eines sicherheitskritischen Fahrzustands eines Kraftfahrzeugs mit Automatikgetriebe, welches eine Ansteuereinrichtung für Kupplungen (7, 9) und/oder Gangaktuatoren des Automatikgetriebes oder automatischen Schaltgetriebes nach einem der vorangegangenen Ansprüche aufweist,
**dadurch gekennzeichnet, dass**
in einem Fehlerfall das erste Ventil (1) in eine von der Fahrbereichswählhebelposition unabhängige Stellung verbracht wird.

## Claims

1. Control device for clutches (7, 9) and/or gear actuators of an automatic transmission or automatically shifted manual transmission, with a first valve (1) which opens or closes ducts (22, 23, 25, 26) carrying hydraulic fluid and leading to the clutches (7, 9) and/or gear actuators in accordance with a position (D, N, R, P) of a driving range selector lever, wherein a positioning device (10, 28) is provided, by means of which device the first valve (1) can be brought into a position which is independent of the driving range selector lever position (D, N, R, P),
**characterised in that**
the first valve (1) is a manual slide valve whose piston (27), which is held so as to be linearly displaceable in a cylinder (1.0), can be displaced in a direction (ax1) in accordance with the driving range selector lever position (D, N, R, P), and that the positioning device (10, 28) has a piston operating spring (28) which acts on the piston (27) in the one direction (ax1) in order to bring the piston (27) into the position which is independent of the driving range selector lever position (D, N, R, P).

2. Control device according to Claim 1,
**characterised in that**
at least one of the ducts (25, 26) carrying hydraulic fluid, preferably all the ducts (25, 26) carrying hydraulic fluid, which lead to the clutches (7, 9) and/or actuators is/are ventilated when the first valve (1) is in the position which is independent of the driving range selector lever position (D, N, R, P).

3. Control device according to Claim 1 or 2,
**characterised in that**
the positioning device (10, 28) has a hydraulic operating device (24, 10, 1.1, 27.1) which acts on the piston (27) in the other direction (ax2) in order to bring the piston (27) out of the position which is independent of the driving range selector lever position (D, N, R, P).

4. Control device according to Claim 3,
**characterised in that**
the operating device (10, 28) comprises an end face (2.1) of the piston (27) which can be subjected to hydraulic fluid via a duct (24) carrying hydraulic fluid, as well as a second valve (10) which opens or closes this duct (24) carrying hydraulic fluid.

5. Control device according to any one of Claims 1 to 4,
**characterised in that**
the driving range selector lever is connected via a Bowden cable or linkage to a cam disc (2) which acts via a roller (29.1) on an operating rod (29) which displaces the piston (27).

6. Control device according to any one of Claims 1 to 5,
**characterised in that**
the cylinder (1.0) has three slots (1.2, 1.3, 1.4; 1.5, 1.6, 1.7), which are disposed adjacent to one another in the axial direction (ax1, ax2), in each case for each clutch (7, 9) and/or for each gear actuator, wherein the central slot (1.3; 1.6) in each case communicates via one of the ducts (25; 26) carrying hydraulic fluid with the respective clutch (7, 9) and/or the respective gear actuator, wherein the slot (1.4; 1.7) facing the one direction (ax1) in each case communicates with one of the ducts (22, 23) carrying hydraulic fluid, and that an opening piston portion (27.5, 27.6), which overlaps two adjacent slots (1.2, 1.3, 1.4; 1.5, 1.6, 1.7), is in each case associated with the respective three slots (1.2, 1.3, 1.4; 1.5, 1.6, 1.7) disposed adjacent to one another in the axial direction (ax1, ax2) at an equal spacing.

7. Control device according to any one of Claims 4 to 6,
**characterised in that**
the second valve (10) is an electromagnetically operable on-off valve (10).

8. Control device according to any one of the preceding Claims,
**characterised in that**
an electromagnetically operable valve (6, 8) is in each case disposed in the ducts (22, 23) carrying hydraulic fluid and leading to the clutches (7, 9) and/or gear actuators.

9. Method for preventing a safety-critical driving condition of a motor vehicle with an automatic transmission having a control device for clutches (7, 9) and/or gear actuators of the automatic transmission or automatically shifted manual transmission according to any one the preceding Claims,
**characterised in that** the first valve (1) is brought into a position which is independent of the driving range selector lever position in the event of a fault.

## Revendications

1. Dispositif de pilotage pour des accouplements (7, 9) et/ou des actionneurs de passage de vitesse d'une transmission automatique ou d'une boîte de vitesses automatique, comprenant un premier canal (22, 23, 25, 26) conduisant du liquide hydraulique en fonction d'une position (D, N, R, P) d'un levier de sélection de la plage de vitesse vers les soupapes (1) ouvrant ou fermant des accouplements (7, 9) et/ou des actionneurs de passage de vitesse, sachant qu'un dispositif de réglage (10, 28) est prévu, à l'aide duquel la première soupape (1) peut être amenée jusque dans une position indépendante de la position (D, N, R, P) du levier de sélection de la plage de vitesse,
**caractérisé en ce que** :
la première soupape (1) est un tiroir manuel dont le piston (27) à déplacement linéaire et guidé dans un cylindre (1.0) peut être déplacé dans une direction (ax1) en fonction de la position (D, N, R, P) du levier de sélection de la plage de vitesse ; et
le dispositif de réglage (10, 28) présente un ressort d'actionnement de piston (28) agissant sur le piston (27) dans la une direction (ax1) pour amener le piston (27) jusque dans la position indépendante de la position (D, N, R, P) du levier de sélection de la plage de vitesse.

2. Dispositif de pilotage selon la revendication 1, **caractérisé en ce qu'**au moins un des canaux (25, 26) conduisant du liquide hydraulique, de préférence tous les canaux (25, 26) conduisant du liquide hydraulique, vers les accouplements (7, 9) et/ou les actionneurs de passage de vitesse est aéré lorsque la première soupape (1) se trouve dans la position indépendante de la position (D, N, R, P) du levier de sélection de la plage de vitesse.

3. Dispositif de pilotage selon l'une ou l'autre des revendications 1 et 2, **caractérisé en ce que** le dispositif de réglage (10, 28) présente un dispositif d'actionnement hydraulique (24, 10, 1.1, 27.1) agissant sur le piston (27) dans l'autre direction (ax2) pour amener le piston (27) en dehors de la position indépendante de la position (D, N, R, P) du levier de sélection de la plage de vitesse.

4. Dispositif de pilotage selon la revendication 3, **caractérisé en ce que** le dispositif de réglage (10, 28) comporte une surface frontale (2.1) du piston (27), laquelle peut être alimentée en liquide hydraulique par un canal (24) conduisant du liquide hydraulique, ainsi qu'une seconde soupape (10) ouvrant ou fermant ce canal (24) conduisant du liquide hydraulique.

5. Dispositif de pilotage selon l'une des revendications 1 à 4, **caractérisé en ce que** le levier de sélection de la plage de vitesse est relié à une came (2) par un câble Bowden ou par une tringlerie, ladite came agissant sur une tige d'actionnement (29) qui déplace le piston (27) par l'intermédiaire d'une poulie (29.1).

6. Dispositif de pilotage selon l'une des revendications 1 à 5, **caractérisé en ce que** :
le cylindre (1.0) présente respectivement pour chaque accouplement (7, 9) et/ou pour chaque actionneur de passage de vitesse trois fentes (1.2, 1.3, 1.4 ; 1.5, 1.6, 1.7) agencées en direction axiale (ax1, ax2) en adjacence l'une par rapport à l'autre, sachant que respectivement la fente médiane (1.3 ; 1.6) est reliée à l'accouplement respectif (7, 9) et/ou à l'actionneur de passage de vitesse respectif, respectivement par un des canaux (25, 26) conduisant du liquide hydraulique, et que la fente (1.4 ; 1.7) tournée respectivement vers la une direction (ax1) est reliée respectivement à un des canaux (22, 23) conduisant du liquide hydraulique ; et
un tronçon de piston (27.5, 27.6) s'ouvrant et recouvrant respectivement deux fentes adjacentes (1.2, 1.3, 1.4 ; 1.5, 1.6, 1.7) est attribué aux fentes (1.2, 1.3, 1.4 ; 1.5, 1.6, 1.7) agencées respectivement en direction axiale (ax1, ax2) à équidistance en adjacence l'une par rapport à l'autre.

7. Dispositif de pilotage selon l'une des revendications 4 à 6, **caractérisé en ce que** la seconde soupape (10) est une soupape à deux positions (ouverte/fermée) (10) pouvant être actionnée par voie électropneumatique.

8. Dispositif de pilotage selon l'une des revendications précédentes, **caractérisé en ce qu'**une soupape (6, 8) pouvant être actionnée par voie électropneumatique est agencée respectivement dans les canaux (22, 23) conduisant du liquide hydraulique vers les accouplements (7, 9) et/ou les actionneurs de passage de vitesse.

9. Procédé pour éviter un état de conduite, critique quant à la sécurité, d'un véhicule automobile avec transmission automatique, lequel présente un dispositif de pilotage pour des accouplements (7, 9) et/ou des actionneurs de passage de vitesse d'une transmission automatique ou d'une boîte de vitesses automatique selon l'une des revendications précédentes, **caractérisé en ce que**, dans un cas d'erreur, la première soupape (1) est amenée jusque dans une position indépendante de la position du levier de sélection de la plage de vitesse.
